# EUROPEAN PATENT APPLICATION

(11) **EP 4 368 434 A1**
(43) Date of publication of application: **15.05.2024**
(21) Application number: 23207074.8
(22) Date of filing: 31.10.2023
(51) Int. Cl.: B60K 15/04

(54) **CAPLESS FUEL FILLER SYSTEM**

(30) Priority: 10.11.2022 GB 202216742
(71) Applicant: Nissan Motor Manufacturing (UK) Ltd, Bedford Bedfordshire MK43 0DB (GB)
(72) Inventor: Hart, Daniel, Cranfield, MK430DB (GB)

(57) **Abstract**

A capless fuel filler system 20 comprises an inlet at an exterior end of a filler pipe 22. Inlet 21 is closed/opened by a flap 23 hinged at 24 to move between a closed position blocking filler pipe 22 and an open position where a fuel filler nozzle (not shown) can be inserted into filler pipe 22. System 20 comprises an electrical heating element 30 which can generate heat to melt ice that may have formed on flap 23, holding it in the closed position. Power may be supplied continuously; on demand by a manual switch; or for a fixed period of time. Power may also be supplied in response to ambient temperature; having low power below a first temperature threshold, and optionally higher power below a second threshold. Power may also be turned off above a third threshold higher than the first threshold.

## Description

### Technical Field of the Invention

The present invention relates to a capless fuel filler system. In particular, the present invention relates to a capless fuel filler system for an automotive vehicle; to a method of operating such a system; and to a vehicle incorporating such a system.

### Background to the Invention

Combustion engined automotive vehicles are provided with a fuel tank adapted to be filled with fuel by provision of a fuel filler system. In a typical fuel filler system, a filler pipe is provided between the fuel tank at an interior or outlet end of the filler pipe; and an inlet at an exterior or inlet end of the filler pipe. The inlet is closed and opened by use of a cap secured to the end of the filler pipe via a screw thread, twist lock, or the like. When not in use for fuelling purposes, the fuel filler system is provided behind a movable lid, the lid lying substantially flush with the surrounding body when closed and providing access to the cap and filler pipe when open. The lid provides the fuel filler system with protection from the ambient environment; and improves the aesthetic appearance of the vehicle body.

The use of a cap to open and close the filler pipe, whilst simple and functional, has drawbacks. For instance, the cap requires direct physical interaction by the user to facilitate fuelling. This can result in contamination of the user's hands with fuel or the like. It also creates an opportunity for the user to lose the cap, or to fail to replace it. To minimise the possibility of loss, the cap may be secured to the inlet by a flexible tether; but it is possible that a cap hanging from a tether can damage vehicle paintwork during fuelling. Additionally, there may be problems with the cap coming loose; or with fuel leakage if the cap is inadequately secured by the user. Conversely, an overtightened cap may be difficult to remove for subsequent fuelling. Vehicle users may also be irritated by the short, but measurable, time required to remove and replace the cap at each refuelling event.

In view of these issues, an increasing number of vehicles have been fitted with capless fuel filler systems. In such systems, the cap is replaced by a spring biased closure at the external end of the filler pipe. Typically, the closure comprises a flap biased to seal against the end of the filler pipe. When a fuel filler nozzle is pressed against the flap, this overcomes the bias and allows the nozzle to penetrate into the filler pipe so as to supply fuel. As with cap filler systems, capless systems are typically provided behind a protective lid. Nevertheless, it has been noted that despite such lids, in low temperature environments, moisture can reach the flap of the capless fuel filler system. If the temperature drops sufficiently, the moisture can freeze; and the resultant ice can hold the flap in the shut position. In such instances, considerable force may be required to overcome the ice holding the flap shut. The force required may be beyond that applicable by a particular user; or may be sufficient to cause concern to a user. In some instances, applying sufficient force to break the ice may risk damage to the flap.

Accordingly, it is an object of the present invention to at least partially overcome or alleviate the above identified issues.

### Summary of the Invention

According to a first aspect of the present invention, there is provided a capless fuel filler system comprising an electrical heating element.

The provision of an electrical heating element enables the capless fuel filler system to be heated so as to prevent the formation of ice; or so as to melt any ice that has formed. In either event, this prevents ice from holding the capless fuel filler system shut. Accordingly, this overcomes the above identified issues with use of capless fuel filler systems in cold environments.

The capless fuel filler system may comprise a filler pipe provided with a closure at an outer end. The closure may comprise a flap. The closure may be moveable between a closed position where it blocks the filler pipe; and an open position where a fuel filler nozzle can project into the filler pipe. In the closed position, the closure may form a seal against the filler pipe. To facilitate sealing, an O ring or other suitable sealing element may be fitted to the closure and/or to the filler pipe. Movement of the closure from the closed position to the open position may be facilitated by insertion of a fuel filler nozzle. Movement of the closure may be facilitated by a closure mechanism. The closure mechanism may comprise a hinge, axle or the like. The closure mechanism may be biased to the closed position in the absence of insertion of a fuel filler nozzle. The biasing may be achieved by provision of a suitable spring element.

In some embodiments, the closure or flap may comprise the electrical heating element. In such embodiments, the electrical heating element may be provided towards the periphery of the closure. This allows for more efficient melting of ice connected to both closure and filler pipe and thereby holding the closure shut.

In some embodiments, the electrical heating element may be provided within the closure. In such embodiments, the electrical heating element may be integrally moulded into the closure; or the electrical heating element may be threaded through a passageway provided in the closure.

In other embodiments, the electrical heating element may be provided on a surface of the closure. In such embodiments, the electrical heating element may be fitted directly to the surface; or the electrical heating element may be fitted within a surface channel. Providing the electrical heating element within a channel can prevent the electrical heating element projecting proud of the surface. This can reduce the prospect of accidental damage to the electrical heating element; or of accidentally dislodging the electrical heating element. In surface fitted embodiments, the electrical heating element may be fixed in position by use of an adhesive. Alternatively, the electrical heating element may be fixed in position by other fixing elements or formations including brackets, clips, clasps or the like.

In some embodiments, the filler pipe may comprise the electrical heating element. In such embodiments, the electrical heating element may be provided close to the closure in the closed position. This allows for more efficient melting of ice connected to both closure and filler pipe; and thereby holding the closure shut.

In some embodiments, the electrical heating element may be provided within the filler pipe. In such embodiments, the electrical heating element may be integrally moulded into the filler pipe; or the electrical heating element may be threaded through a passageway provided in the filler pipe.

In other embodiments, the electrical heating element may be provided on a surface of the filler pipe. In such embodiments, the electrical heating element may be fitted directly to the surface or the electrical heating element may be fitted within a surface channel. Providing the electrical heating element within a channel can prevent the electrical heating element projecting proud of the surface. This can reduce the prospect of accidental damage to the electrical heating element; or of accidentally dislodging the electrical heating element. In surface fitted embodiments, the electrical heating element may be fixed in position by use of an adhesive. Alternatively, the electrical heating element may be fixed in position by other fixing elements or formations including brackets, clips, clasps or the like.

The electrical heating element may comprise wire or cable. The electrical heating element may comprise any suitable conductive material. In one example, the electrical heating element may comprise copper wire. In some embodiments, the copper wire may be provided with an external sheath or coating. The external sheath or coating may provide protection to the electrical heating element and/or may provide electrical insulation for the electrical heating element.

The electrical heating element may extend along a substantially straight or a substantially arcuate path. In some such embodiments, the electrical heating element may comprise deviations transverse to said straight or arcuate path. The deviations may have a curved form. In some embodiments, the deviations may have a substantially sinusoidal form. In a further embodiment, the electrical heating element may comprise coils. The said coils may be centred around said straight or arcuate path.

The electrical heating element may be directly connected to an external power source. Alternatively, the electrical heating element may be provided with a power socket. The power socket can facilitate connection to a power cable through which electrical power can be supplied. In embodiments where there is a power socket supplied, the power socket may be accessible externally of the capless fuel filler system.

In some embodiments, the electrical heating element may be supplied with power on a continuous basis, when the vehicle is active. For such purposes, the vehicle may be deemed active when the ignition switch or starter switch is activated to supply electrical power to vehicle systems. This can be achieved simply by connecting the electrical heating element to the vehicle electrical system.

In other embodiments, a control unit may be configured to control supply of power to the electrical heating element. The control unit may comprise a microprocessor. The control unit may be configured to vary the magnitude of power supplied to the electrical heating element and/or when power is supplied to the electrical heating element. The control unit may be configured to control the power supply to the electrical heating element by controlling operation of a power switching unit.

In some embodiments, the control unit may be configured to supply power to the electrical heating element on an intermittent basis when the vehicle is active. In some embodiments, the control unit may be configured to supply power to the electrical heating element for a pre-set time interval after the vehicle becomes active. This can allow the electrical heating element to melt any ice that has formed on the capless fuel filler system whilst the vehicle is inactive.

In some embodiments, the control unit may be configured to supply power to the electrical heating element continuously or for a pre-set time interval following activation of a user control switch. A suitable pre-set time interval may be say 2 minutes; 5 minutes; or 10 minutes. This can allow a user to activate the electrical heating element when a user is aware that ice has formed; or suspects that ice may have formed, on the capless fuel filler system.

In some embodiments, the control unit may be configured to vary the power supplied to the electrical heating element in response to a temperature sensor. The temperature sensor may be a dedicated temperature sensor fitted to, or in the vicinity of, the capless filler system. Alternatively, the temperature sensor may be a temperature sensor fitted elsewhere on the vehicle. For example, the temperature sensor may be a temperature sensor fitted to an engine control unit or to a body control unit. In a particular example, the temperature sensor may be an ambient external temperature sensor. Many vehicles are commonly provided with such sensors to provide data for other vehicle systems or functions including; but not limited to; a frost warning alarm, driver information display, or the like. Using the data from such temperature sensors for the control unit can avoid the need to fit additional sensor(s) to the vehicle. Additionally, since ice formation occurs in reaction to low external ambient temperatures, sensing external ambient temperature rather than the temperature of the capless fuel filler system or in the vicinity of the capless fuel filler system does not significantly impact the effectiveness of prediction of ice formation.

In one embodiment, the control unit is configured to respond when the temperature detected by the temperature sensor is below a threshold temperature. A suitable threshold temperature may be say 5°C.

In such implementations, in response to the temperature detected by the temperature sensor being lower than the threshold temperature, the control unit may be configured to supply power to the electrical heating element. In particular embodiments, the control unit may be configured to supply power continuously or intermittently whilst the detected temperature is below the threshold temperature; or to supply power for a pre-set time interval after the detected temperature drops below the threshold temperature. Similarly, if the detected temperature is below the threshold temperature upon vehicle activation, the control unit may be configured to supply power continuously or intermittently for a pre-set time interval after activation.

In some embodiments, the control unit may be configured to make a first response when the detected temperature is below a first threshold temperature; and to make a second response when the detected temperature is below a second threshold temperature. The second threshold temperature is different to the first threshold temperature. In many embodiments, the second threshold temperature is a lower temperature than the first threshold temperature. A suitable second threshold temperature may be say 2°C.

In such implementations, the second response may supply power at a higher power level than the first response; supply power for a longer pre-set time interval than the first response; supply power intermittently at a higher duty cycle than the first response; and/or supply power continuously rather than intermittently, or for a pre-set time interval.

Additionally or alternatively to the options above, the control unit may switch off power when the ambient temperature rises to, say, 10°C, during the course of a journey.

According to a second aspect of the present invention, there is provided a method of operating a capless fuel filler system comprising an electrical heating element, the method comprising the steps of: detecting temperature; and supplying power to the electrical heating element if the detected temperature is lower than a threshold temperature.

The method of the second aspect of the present invention may incorporate any or all features of the previous aspect of the present invention as required or as appropriate.

According to a third aspect of the present invention, there is provided a vehicle comprising a capless fuel filler system according to the first aspect of the present invention; or comprising a capless fuel filler system operable according to the method of the second aspect of the present invention.

The vehicle of the third aspect of the present invention may incorporate any or all features of the previous aspects of the present invention as required or as appropriate.

### Detailed Description of the Invention

In order that the invention may be more clearly understood one or more embodiments thereof will now be described, by way of example only, with reference to the accompanying drawings, of which:
- Figure 1: is a schematic illustration of a vehicle provided with a fuel filler system;
- Figure 2a: is an external view of a capless fuel filler system according to the prior art, the lid 2 being broken away to show the internal structure;
- Figure 2b: is a cross-sectional view along plane A-A of the capless fuel filler system of figure 2a;
- Figure 3a: is a cross-sectional view of a capless fuel filler system comprising an electrical heating element according to the present invention;
- Figure 3b: is an external view of the exterior end of the filler pipe of the capless fuel filler system of figure 3a; and
- Figure 4: is a schematic block diagram illustrating how operation of the electrical heating element can be controlled.

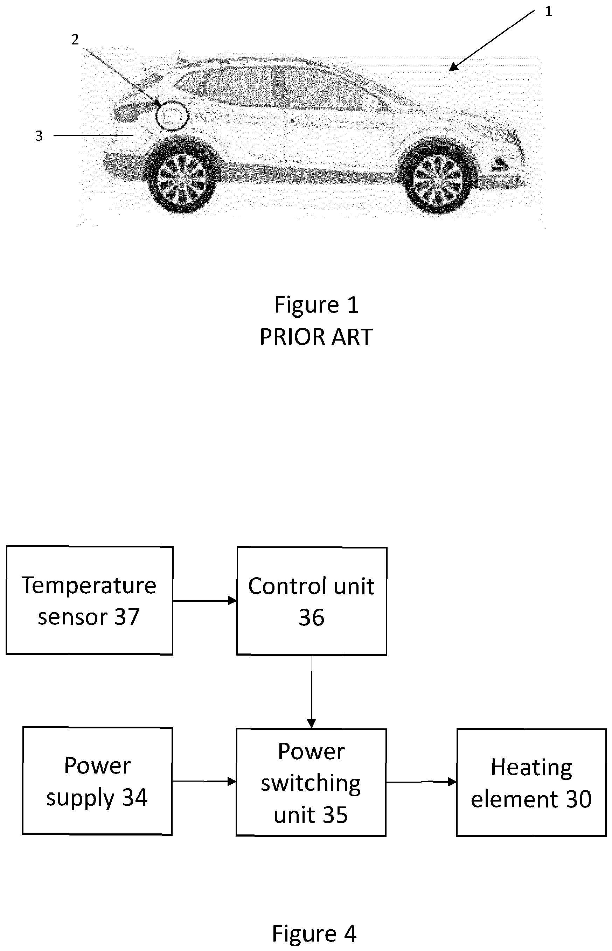

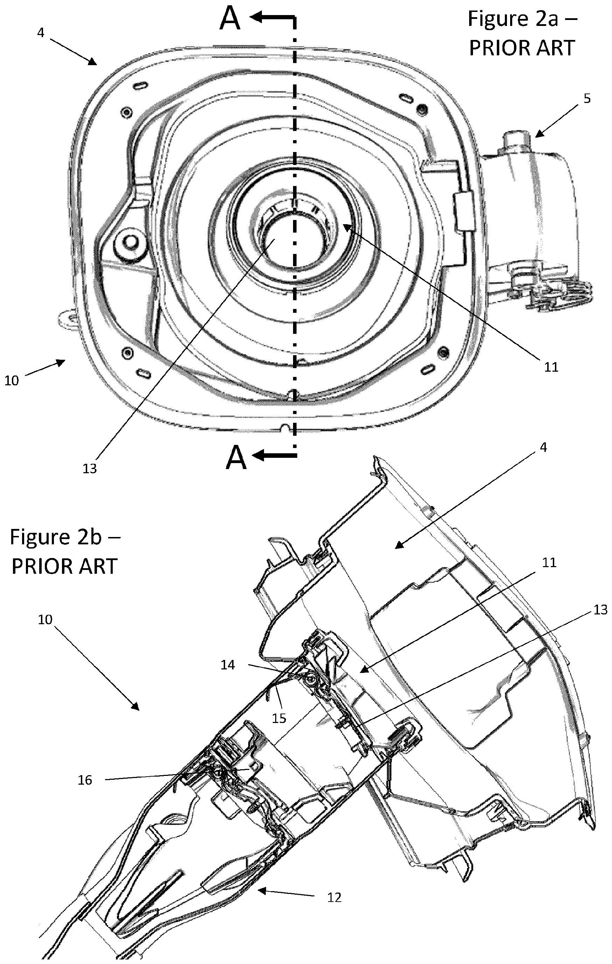

Turning to Figure 1, an automotive vehicle 1 comprises an internal fuel tank (not shown) filled by use of a fuel filler system accessed by opening a lid 2 provided on the exterior of body 3. The lid 2 covers a recess 4 (shown in Figure 2a) within which is provided the inlet 11. The lid 2 is connected to the body by hinge 5.

In the example shown in Figure 2, the fuel filler system is a capless fuel filler system 10 comprising a filler pipe 12 provided between the fuel tank and an inlet 11 at an outer or exterior end of the filler pipe 12. The inlet 11 is closed and opened by way of a closure in the form of flap 13. The flap 13 is mounted on hinge 14 so as to be moveable between a closed position where it blocks the filler pipe 12; and an open position where a fuel filler nozzle (not shown) can project into the filler pipe 12. Movement of the flap 13 from the closed position to the open position is facilitated by insertion of a fuel filler nozzle. When this occurs, flap 13 rotates around hinge 14; allowing the nozzle to project into the filler pipe 12. Subsequently, fuel can flow from the nozzle into the filler pipe 12 to fill the fuel tank. Once the fuel nozzle is removed, the flap 13 moves from the open position to the closed position about hinge 14 under a biasing force applied by spring 15. As shown in Figure 2b, the filler pipe 12 also has an internal collar 16 which can interact with and guide positioning of the end of the fuel nozzle, once inserted.

Such capless fuel filler systems enable users to insert a fuel nozzle for fuelling the vehicle 1 without having to interact with a cap. This therefore avoids the possibility of contamination of a user's hands by the cap, and avoids difficulties with removal and replacement of the cap. Nevertheless, in certain conditions, it is possible for moisture in the vicinity of flap 13 to freeze. This can result in the formation of ice that holds the flap 13 in the closed position.

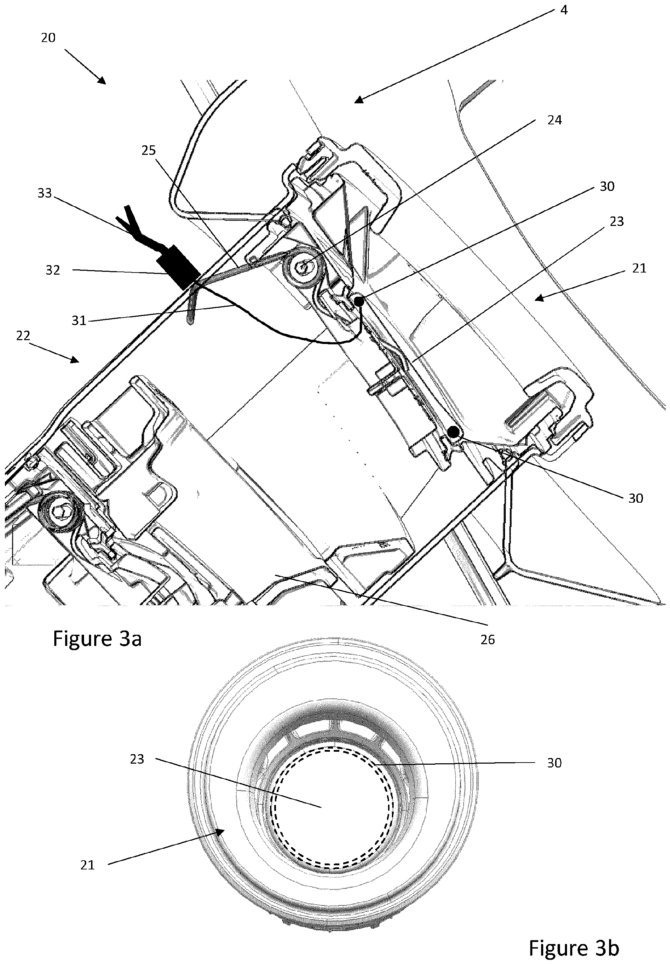

Turning now to Figure 3, a capless fuel filler system 20 according to the present invention is shown. As in the prior art system, the capless fuel filler system 20 comprises a filler pipe 22 provided between the fuel tank and an inlet 21 at an outer or exterior end of the filler pipe 22. The inlet 21 is closed and opened by way of a closure in the form of flap 23. The flap 23 is mounted on a hinge 24, so as to be moveable between a closed position where it blocks the filler pipe 22; and an open position where a fuel filler nozzle (not shown) can project into the filler pipe 22. Movement of the flap 23 from the closed position to the open position is facilitated by insertion of a fuel filler nozzle. When this occurs, the flap 23 rotates around hinge 24; allowing the nozzle to project into the filler pipe 22. Subsequently, fuel can flow from the nozzle into the filler pipe 22 to fill the fuel tank. Once the fuel nozzle is removed, the flap 23 moves from the open position to the closed position about hinge 24 under a biasing force applied by spring 25. As shown in Figure 3, the filler pipe 22 has an internal collar 26 which can interact with and guide positioning of the end of the fuel nozzle, once inserted.

Unlike in the prior art system 10, the capless fuel filler system 20 of the present invention additionally comprises an electrical heating element 30. When supplied with electrical power, the electrical heating element 30 generates heat. This heat is conducted into the flap 23; and can thereby melt ice that may have formed on the flap 23. This can prevent any such ice holding the flap 23 in the closed position.

As illustrated in Figure 3, the electrical heating element 30 is provided within the flap 23. Typically, the electrical heating element 30 might be formed from copper wire; and may be provided with a protective and/or insulating sheath. To fit the electrical heating element 30 within flap 23 as shown, it could be integrally moulded with the flap 23. Alternatively, the electrical heating element may be threaded through a passage formed in flap 23 during moulding; or machined into flap 23 after moulding.

As shown most clearly in Figure 3b, the electrical heating element 30 runs parallel to the outer edge of the flap 23. As such, the electrical heating element 30 is close to the parts of the flap 23 that abut the filler pipe 22 when the flap 23 is in the closed position. Accordingly, the electrical heating element 30 initially conducts heat to those parts of the flap 23 that are most likely to be held to the filler pipe 22 by ice. This reduces the power or time required to effectively melt ice that might interfere with movement of the flap 23.

Whilst the electrical heating element 30 illustrated in Figure 3 is provided within the flap 23, the skilled person will appreciate that the electrical heating element can equally be provided on the surface of the flap 23; or in a surface channel cut into the flap 23. In such embodiments, the electrical heating element 30 could be retained in position by use of adhesive and/or other fixing means. The skilled person will equally appreciate that the electrical heating element 30 (or an additional electrical heating element) may also be provided within or on the filler pipe 22.

In order to supply power to the electrical heating element, an electrical connection 31 (or, in some embodiments, an extended portion of the electrical heating element) is provided between the electrical heating element 30 and a power socket 32 provided on the outer surface of filler pipe 22. The power socket 32 enables connection via cable 33 to the vehicle power supply.

In a simple embodiment, the electrical heating element 30 may be supplied with power continuously whenever the vehicle is activated (for instance if the engine is running and/or the vehicle is switched on). This can ensure that the capless fuel filler system 20 stays ice free at all times. Since this is not especially energy efficient, it may be that the electrical heating element 30 is supplied with power for a pre-set period after the vehicle 1 is activated. This would accordingly melt any ice that had formed whilst the vehicle 1 is inactive. Typically, ice would be more likely to form on the capless fuel filler system 20 whilst the vehicle 1 is inactive, especially for extended periods in cold weather; ice could also form in this area during or after the process of car washing. It would also be possible for the electrical heating element 30 to only be supplied with power in response to a user input. This would allow a user to control heating operation, but is not necessarily an optimal solution as a user may fail to switch on heating operation when necessary; or may fail to switch off heating operation when it is not needed.

In an alternative embodiment, illustrated schematically in Figure 4, the power supply to the electrical heating element 30 is controlled in response to temperature. As shown in this Figure, the power supply 34 to the electrical heating element 30 is connected and disconnected by a power switching unit 35 controlled by control unit 36. The control unit 36 is additionally connected to a temperature sensor 37 and is configured to receive from the temperature sensor 37 data signals indicative of the temperature detected by temperature sensor 37. Whilst is possible to use a temperature sensor 37 mounted within recess 4, given that ice formation is predominantly influenced by the local environment; the control unit 36 may equally receive input from a temperature sensor 37 mounted elsewhere on the vehicle 1 and/or used by one or more other vehicle systems. For instance, the temperature sensor 37 may be an ambient external temperature sensor used for a frost warning alarm, driver information display or the like.

In such an embodiment, the control unit 36 is operable to identify when the temperature detected by the temperature sensor 37 drops below a threshold temperature; or if the detected temperature is below the threshold temperature when the vehicle is activated. When this condition occurs, the control unit 36 is operable to control the power switching unit 35 to enable the supply of power to the electrical heating element 30. In some embodiments, the power switching unit 35 allows the supply of power to continue for as long as the detected temperature is below the threshold temperature. In other embodiments, the power switching unit 35 allows the supply of power to the electrical heating element 30 only for a pre-set period after the vehicle 1 is activated at a detected temperature below the threshold temperature or after the detected temperature drops below the threshold temperature. The skilled person will however appreciate that variations on such control schemes including variations with multiple threshold temperatures could alternatively be implemented, if desired. Equally, the power to the heating element may be turned off if the ambient temperature rises above a "safe" threshold suitably distant from 0°C, e.g. 10°C.

The control unit 36 and power switching unit 35 may be provided at any suitable location on the vehicle 1. If the control unit 36 and power switching unit 35 are integrated with or adjacent to the power supply socket 32 (Fig. 3a), the cable 33 may be suitably adapted to supply data from the temperature sensor 37 in addition to power.

The one or more embodiments are described above by way of example only. Many variations are possible without departing from the scope of protection afforded by the appended claims.

## Claims

1. A capless fuel filler system (20) comprising an electrical heating element (30).

2. A capless fuel filler system (20) as claimed in claim 1, wherein the capless fuel filler system comprises a filler pipe (22) provided with a closure (23) comprising a flap at an outer end of the filler pipe (22).

3. A capless fuel filler system (20) as claimed in claim 2, wherein the closure (23) is moveable between a closed position where it blocks the filler pipe (22) and an open position where a fuel filler nozzle can project into the filler pipe (22).

4. A capless fuel filler system (20) as claimed in claim 3, wherein movement of the closure (23) is facilitated by a closure mechanism comprising a hinge (24) biased to the closed position by provision of a spring element (25).

5. A capless fuel filler system (20) as claimed in any one of claims 2 to 4, wherein the electrical heating element (30) is provided towards the periphery of the closure (23).

6. A capless fuel filler system (20) as claimed in any one of claims 2 to 4, wherein the electrical heating element (30) is provided within the filler pipe (22) or on a surface of the filler pipe.

7. A capless fuel filler system (20) as claimed in any preceding claim, wherein the electrical heating element (30) comprises wire or cable.

8. A capless fuel filler system (20) as claimed in any preceding claim, wherein the electrical heating element (30) is supplied with power on a continuous basis when the vehicle (1) is active.

9. A capless fuel filler system (20) as claimed in any one of claims 1 to 7, wherein a control unit (36) is configured to control supply of power to the electrical heating element (30) by varying the magnitude of power supplied to the electrical heating element and/or when power is supplied to the electrical heating element.

10. A capless fuel filler system (20) as claimed in claim 9, wherein the control unit (36) is configured to vary the power supplied to the electrical heating element (30) in response to a temperature sensor (37).

11. A capless fuel filler system (20) as claimed in claim 10, wherein in response to the temperature detected by the temperature sensor (37) being lower than a threshold temperature, the control unit (36) is configured to supply power to the electrical heating element (30).

12. A capless fuel filler system (20) as claimed in claim 11, wherein the control unit (36) is configured to supply power for a pre-set time interval after the detected temperature drops below the threshold temperature.

13. A capless fuel filler system (20) as claimed in any one of claims 10 to 12, wherein the control unit (36) is configured to make a first response when the detected temperature is below a first threshold temperature; and to make a second response when the detected temperature is below a second threshold temperature.

14. A capless fuel filler system (20) as claimed in any one of claims 10 to 13, wherein the control unit (36) is configured to stop supplying power when the detected temperature rises above a third threshold temperature which is above the first threshold temperature.

15. A method of operating a capless fuel filler system (20) comprising an electrical heating element (30), the method comprising the steps of: detecting temperature; and supplying power to the electrical heating element (30) if the detected temperature is lower than a threshold temperature.

16. A vehicle (1) comprising a capless fuel filler system (20) according to any one of claims 1 to 14; or comprising a capless fuel filler system (20) operable according to the method of claim 15.
